(19) Europäisches Patentamt
European Patent Office
Office européen des brevets

(11) **EP 4 549 126 A1**

(12) **EUROPÄISCHE PATENTANMELDUNG**

(43) Veröffentlichungstag:
**07.05.2025 Patentblatt 2025/19**

(21) Anmeldenummer: **24208809.4**

(22) Anmeldetag: **24.10.2024**

(51) Internationale Patentklassifikation (IPC):
**B29C 48/08** (2019.01)   **B29C 48/305** (2019.01)
**B29C 48/395** (2019.01)   **B29C 48/565** (2019.01)
**B29C 48/575** (2019.01)   **B29C 48/88** (2019.01)
**B29C 48/92** (2019.01)   **B29C 48/66** (2019.01)

(52) Gemeinsame Patentklassifikation (CPC):
**B29C 48/08; B29C 48/0018; B29C 48/022;
B29C 48/305; B29C 48/397; B29C 48/565;
B29C 48/575; B29C 48/66; B29C 48/914;
B29C 48/92;** B29C 2948/92704; B29C 2948/92923;
B29K 2023/0683

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(30) Priorität: **02.11.2023 DE 102023004385**

(71) Anmelder: **Nowofol Kunststoffprodukte GmbH &
Co. KG
83313 Siegsdorf (DE)**

(72) Erfinder:
• **von Großmann, Ulrich
83313 Siegsdorf (DE)**
• **Luft, Konstantin
83377 Vachendorf (DE)**
• **Kirchner, Michael
83329 Waging am See (DE)**

(74) Vertreter: **Einsiedler, Johannes
PM&L Patentanwaltskanzlei Dr. Einsiedler
Am Herrnberg 34
83209 Prien am Chiemsee (DE)**

(54) **VERFAHREN ZUR HERSTELLUNG EINER FOLIE AUS POLYETHYLEN MIT ULTRAHOHEM MOLEKULARGEWICHT MITTELS EXTRUSION**

(57) Verfahren zur Herstellung einer Folie aus einem Polyethylen mit ultrahohem Molekulargewicht (UHMW-PE), umfassend die Schritte Bereitstellung eines UHMW-PE mit einer Dichte größer 0,96 g/cm$^3$ und einem Molekulargewicht zwischen 1 x 10$^4$ g/mol und 10 x 10$^6$ g/mol, Extrudieren des bereitgestellten UHMW-PE mit einem Extruder, ausgelegt auf eine hohe Scherung, durch eine Kombination einer Barriereschnecke mit zumindest einem Scher- und zumindest einem Mischelement zu einer Folie, Führen der extrudierten Folie über eine Kühlwalzenkombination, wobei die Extrusionstemperatur 170°C bis 300°C beträgt. Die extrudierte Folie kann als gegossenen Primärfolie oder als in Maschinenrichtung verstreckte Folie ausgeführt sein. Durch die Verstreckung werden die Festigkeiten in Maschinenrichtung erhöht, das Dickenspektrum erweitert und die Oberfläche geglättet.

**Figur 1**

EP 4 549 126 A1

**Beschreibung**

Die vorliegende Erfindung betrifft ein Verfahren zur Herstellung einer Folie aus Polyethylen mit ultrahohem Molekulargewicht mittels Extrusion.

Polyethylen mit ultrahohem Molekulargewicht, nachstehend als UHMW-PE bezeichnet, weist gegenüber anderen Polyethylenen mit niedrigerem Molekulargewicht vielerlei Vorteile auf. So weisen Gegenstände, die aus UHMW-PE hergestellt sind, Eigenschaften wie z.B. eine sehr hohe Abrieb- und Abnutzungsbeständigkeit, hervorragende Gleiteigenschaften aufgrund eines geringen Reibungskoeffizienten, eine hervorragende Schlagfestigkeit auch im Tieftemperaturbereich, eine außergewöhnliche chemische Beständigkeit sowie eine sehr gute UV- und Witterungsbeständigkeit, auf. Aufgrund dieser vorteilhaften Eigenschaften wird UHMW-PE in zahlreichen Anwendungsbereichen eingesetzt, wie z.B. für lasttragende Komponenten von Gelenkprothesen, Schwingungsdämpfungskissen, Hydraulikzylindern, Sportgeräten, Gleitlager und Gleitschienen auch im Automobilbereich und für spezielle Anwendungen in der Raumfahrt. Bisher wurde UHMW-PE für solche Anwendungen durch Formpressen, eine RAM-Extrusion, Gelspinnen und Sintern verarbeitet. Ein spezielles Anwendungsgebiet für UHMW-PE umfasst dabei Folien z.B. für Schlauchummantelungen in der Lebensmittelindustrie und für Hydraulikschläuche sowie für Ski-Laufflächen.

Ein besonderes Problem ergibt sich dabei bei einer Folienherstellung mittels Extrusion, da UHMW-PE eine sehr hohe Viskosität und damit sehr geringe Werte der Fließfähigkeit, nachstehend als MFI bezeichnet, aufweist. So weist z.B. LUBMER™ L5000, das von Mitsui Chemicals, Inc. angeboten wird, eine Fließfähigkeit von lediglich 2 g/10 min (190°C, 10 kg Belastung) auf und lässt sich deshalb mit üblichen Verfahren zur Extrusion von Polyethylenfolien nicht zu Folien einer brauchbaren Qualität extrudieren.

Dieses Problem wurde bisher dadurch umgangen, dass das UHMW-PE als Ausgangsmaterial insbesondere in einer Pulverform zunächst mittels Presssintern oder einer RAM-Extrusion zu einem Formkörper verarbeitet wurde und dann von diesem Formkörper durch ein Schälverfahren Folien abgeschält wurden. Die WO 2004 067 118 A1 offenbart bsp. ein derartiges zweistufiges Verfahren. Dieses Verfahren zur Folienherstellung ist jedoch sowohl zeit- als auch kostenintensiv.

Aus der EP 4 001 325 A1 und der EP 3 913 015 A1 sind weitere spezielle Verfahren zur Extrusion von UHMW-PE bekannt, die insbesondere auf die Verwendung von Hilfsmitteln angewiesen sind. Letztgenannte Druckschrift offenbart bsp. ein Verfahren zur Herstellung einer mikroporösen Polyolefinmembran aus einem Polyolefinharz und einem Weichmacher unter Schutzgasatmosphäre. Demnach muss dem pulverförmigen UHMW-PE-Rohstoff ein Prozessöl (z.B. Petroleum-Öl) als Plastifizierer zugesetzt werden, um eine Mischung mit Hilfe eines Doppelschnecken-Extruder verarbeiten zu können. Die genannte Mischung hat dabei lediglich einen Anteil von 25% UHMW-PE, Rest HDPE.

Die EP 4 001 325 A1 offenbart hingegen kein UHMW-PE, sondern ein Polymer, das lediglich eine Dichte von 0,93 - 0,96 g/cm$^3$ und einen geringeren Schmelztemperaturpeak aufweist (Peak 2: 136°C).

Schließlich offenbart die WO 2023 114 080 A1 ein Verfahren zur Herstellung von UHMWPE-Folien wobei die UHMWPE-Polymerpartikel zunächst mit einem geeigneten Schmiermittel (z. B. einem isoparaffinischen Kohlenwasserstoff) gemäß dem im US-Patent US 9,926,416 B2 beschriebenen allgemeinen Verfahren, gemischt werden.

Im Stand der Technik wird demnach UHMW-PE zur Extrusion einer Folie mit HDPE geringerer Dichte und geringerem Molekulargewicht, sowie gegebenenfalls zusätzlich mit Paraffin- oder Mineralölen vermischt, um eine pastöse, heterophasische und homogen dispergierte Primärfolie herstellen zu können, die im weiteren Prozessverlauf in eine mechanisch stabile Folie umgewandelt wird. Nach der Abtrennung bzw. Auswaschung der verbleibenden Ölreste entsteht eine mikroporöse Folie zum Einsatz beispielsweise als Separatorfolie .

Das eingesetzte Öl dient in beiden Anwendungen sowohl als Verarbeitungshilfsmittel in der Extrusion, als auch zur Erzeugung der Mikroporosität durch Bildung einer heterogenen Phase in der Schmelze, die nach dem Auswaschen der Ölreste Poren in der Folie zurücklässt.

Nachteilig an den im Stand der Technik bekannten Verfahren ist, dass eine kompakte Folie, die abgesehen von den üblichen Antioxidantien und Katalysatorrückständen ausschließlich aus UHMW-PE besteht nicht herstellbar ist.

Aufgabe der Erfindung ist es daher, ein Verfahren zu schaffen, das eine direkte Herstellung von Folien aus UHMW-PE, die sowohl gegossen als auch zusätzlich inline verstreckt sein können, mittels einer Extrusion ohne den Umweg eines Schälens eines vorher hergestellten Formkörpers ermöglicht.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, durch eine besondere Ausgestaltung eines Extrusionsverfahrens sowohl hinsichtlich der Mechanik als auch der Verfahrensparameter eine direkte Extrusion eines reinen UHMW-PE zu einer Folie zu ermöglichen und diese Folie ggf. mittels geeigneter Prozessparameter in Maschinenrichtung zu verstrecken.

Die besondere Ausgestaltung des Extrusionsverfahrens bestimmt sich durch die Faktoren Druck, Temperatur und Verweilzeit der Masse im Verfahrensteil sowie erfindungsgemäß durch die eingebrachten Scherkräfte auf das in Reinform vorliegende UHMW-PE.

Die eingebrachten Scherkräfte auf das UHMW-PE erzeugen ein aus sich heraus generiertes Schmiermittel, d.h. Prozesshilfsmittel, durch den teilweisen Bruch der Molekülketten, was das Problem der mangelnden Fließfähigkeit löst, so dass eine kontinuierliche Extrusion des Granulats zur Fertigung von Flachfolien möglich wird.

Ein zum Aufschmelzen und Extrudieren des in Reinform vorliegenden UHMW-PE geeigneter Extruder weist üblicherweise neben der Einzugszone, die auch genutet ausgeführt sein kann, mindestens zwei weitere Zonen auf. Üblicherweise schließt sich an die Einzugszone eine Aufschmelzzone (Kompressionszone) und daran eine Ausstoßzone an.

Um eine homogene Schmelze zu erhalten, weist der Extruder vorzugsweise eine Länge L im Bereich von 15 bis 40-D auf. D ist dabei der Schneckendurchmesser. Die Einzugszone weist vorzugsweise eine Länge im Bereich von 3 bis 6-D auf, wobei auch hier D der Schneckendurchmesser ist. Als Schneckendurchmesser wird dabei der Außendurchmesser der Schnecke verstanden. Das L/D Verhältnis der Extruderschnecke liegt bevorzugt zwischen 20 und 40, besonders bevorzugt zwischen 24 und 36.

Die Temperierung des Extruders erfolgt vorzugsweise derart, dass die Massetemperatur der Schmelze am Düsenaustritt im Bereich zwischen 170°C und 300°C, bevorzugt zwischen 200°C und 270°C liegt. Hierzu sind im Extruder üblicherweise Kanäle vorgesehen, die von einem Temperiermedium durchströmt werden können. Als Temperiermedium können zum Beispiel Wasser, vorzugsweise unter Druck, oder Temperieröle eingesetzt werden. Bevorzugt wird diese Art der Temperierung für das Heizen / Kühlen der Einzugszone verwendet. Weiterhin ist es auch möglich den Extruder über elektrische Heizbänder mit Thermoelementen und Luft-Kühlgebläsen, zur Vermeidung von Überhitzung, zu temperieren. Alternativ wird auch das Einspritzen von Wasser zur gezielten Kühlung in den einzelnen Temperaturregelzonen eingesetzt.

Die Schnecke kann eine konstante Gangtiefe und Gangsteigung aufweisen, alternativ ist es jedoch auch möglich, eine Schnecke einzusetzen, bei der sich die Gangsteigung oder die Gangtiefe ändert. Eine Barriereschnecke weist einen zusätzlichen Schneckensteg mit geringerer Gangtiefe und stärkerer Steigung auf, wodurch eine höhere Scherung und verbesserte Aufschmelzleistung erzielt wird. In der Barrierezone wird zwischen dem Feststoffkanal und dem Schmelzekanal unterschieden, wobei der Feststoffkanal in Förderrichtung eine abnehmende Gangtiefe aufweist. Der Barrieresteg separiert den Feststoffkanal und den Schmelzekanal.

Funktionsprinzip, Historie und Eigenschaften moderner Barriereschneckenkonzepte wurden beispielsweise in dem Beitrag zur 6. Fachtagung "Neuigkeiten in der Extrusion", 09.-10. Mai 2001, Süddeutsches Kunststoff-Zentrum, Würzburg von Dipl.-Ing. Robert Michels, ETA Kunststofftechnologie GmbH, Troisdorf, offenbart.

Erfindungsgemäß ist der Extruder mit einer Barriereschnecke ausgerüstet, ausgelegt auf eine hohe Scherung, die in der Aufschmelzzone durch den zusätzlichen Barrieresteg und in der weiteren Extrusionsrichtung durch ein Scherelement eingetragen wird. Die Homogenisierung der Schmelze erfolgt im aufgesetzten Mischelement (z.B. Pineapple Mischer). Demnach weist die Schnecke neben einem üblichen eingesetzten Wendelgang einen zusätzlichen Barreiresteg (2. Gang) und einem Scherelement auch ein optimiertes Mischelement auf.

Bevorzugt eingesetzte Mischelemente sind zum Beispiel solche, bei denen im Schneckensteg Durchbrüche ausgebildet sind, alternativ können im Schneckenkanal zum Beispiel auch Stifte vorgesehen sein, weiterhin ist es auch möglich, im Mischelement einen der üblichen Gewinderichtung des Kanals entgegengerichteten Kanal mit Durchbrüchen auszubilden. Ferner ist es möglich, auf der Schnecke Zahnscheiben auszubilden oder Nocken im Zylinder und auf der Schnecke vorzusehen. Auch können so genannte Dulmage- oder Rapra-Mischelemente eingesetzt werden. Besonders bevorzugt als Mischelemente sind Schnecken mit Stiften im Schneckenkanal, oder Elemente mit Mischigel oder Pineapple Geometrie.

Als Scherelemente eignen sich zum Beispiel Schertorpedos, Troester-Scherteile oder Maddock-Scherteile und/oder ein Ring auf der Schnecke, durch den ein Stauraum erzeugt wird. Besonders bevorzugt wird als Scherelement ein Maddock eingesetzt.

Ein Maß für die im Extruder erzeugte Scherung ist die Scherrate, die neben der Schneckendrehzahl von der Geometrie der Schnecke und den integrierten Elementen abhängt. Andere Parameter, die die eingebrachte Scherung bestimmen sind die Fließfähigkeit des extrudierten Rohstoffes selbst und die Extrudertemperaturen.

Um die gewünschten Scherbedingungen, wie Geschwindigkeit, Verweilzeit, Scherrate, Verarbeitungstemperatur der Schmelze usw., zu erreichen, kann die Drehzahl der Extruderschnecke(n) in einem bestimmten Bereich gewählt werden. Im Allgemeinen steigt die Produkttemperatur mit zunehmender Schneckendrehzahl aufgrund der zusätzlich in das System eingebrachten mechanischen Energie an.

Die Schneckendrehzahl ist grundsätzlich anhängig vom Extruderdesign und kann beispielsweise zwischen etwa 10 und etwa 200 Umdrehungen pro Minute ("U/min") und in einigen Fällen zwischen etwa 100 und etwa 300 U/min. Eine zu hohe Scherung wiederum würde zum Abbau des Materials in der Extrusion führen und zum teilweisen Verlust der UHMW PE spezifischen Eigenschaften.

Bei vorgegebenem Rohstoff wird die Scherung hauptsächlich durch Schneckendrehzahl und Schneckengeometrie bestimmt. Bevorzugt liegt die minimale Scherrate im Bereich der Hauptscherung, dem Feststoffkanal der Barriere bei $0,6*n$ 1/s und im eigentlichen Scherspalt des Scherelementes bei $9,4*n$ 1/s. Höhere Scherraten wirken sich weiter positiv auf das Verfahren aus, und sind demnach bevorzugt.

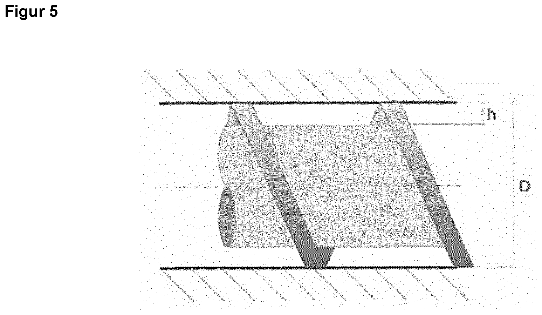

Um die Scherrate im Schneckenbereich eines Extruders abzuschätzen, kann das Zwei-Platten-Modell verwendet werden (vgl. Figur 5). Die Geschwindigkeit der bewegten Platte v ergibt sich aus dem Schneckendurchmesser und der Extruderdrehzahl zu

$$v = \frac{\pi \cdot D \cdot n}{60}$$

D = Zylinderdurchmesser/Schneckendurchmesser am Steg [mm]
d = Schneckendurchmesser [mm]
n = Extruderdrehzahl [1/min]

Die Scherrate ergibt sich dann zu

$$\gamma'(ap) = \frac{\pi \cdot D \cdot n}{60 \cdot (D-d)/2} \, [1/s]$$

Tabelle 1:

| Schneckenelement | Scherrate [1/s] | |
|---|---|---|
| Dimensionen | [min/s] | [1/min] |
| Förderbereich (vor Barrierezone) | 0,7 | *n |
| Feststoffkanal (Anfang Barrierezone) | 0,6 | *n |
| Feststoffkanal (Ende Barrierezone) | 1,0 | *n |
| Feststoffkanal (Ende Barrieresteg) | 2,2 | *n |
| Barrieresteg | 9,4 | *n |
| Schmelzekanal (Barrierezone) | 0,8 | *n |
| Scherelement / Scherspalt (bsp. Maddock) | 9,4 | *n |

Die Direktextrusion von UHMW-PE in Reinform, ohne den Zusatz von Rohstoffen mit niedrigerem Molekulargewicht und besserem Fließverhalten oder dem Zusatz von Ölen als Weichmacher, gelingt erfindungsgemäß nur durch den Einsatz von Extrudern bzw. Extruderschnecken mit hoher Scherung. Durch die hohe Scherung wird der zur Extrusion nötige Anteil an niedrigviskosem, fließfähigem PE direkt innerhalb des Extrusionsprozesses selbst gebildet, ohne dass Zusätze notwendig sind und ohne das UHMW-PE derart zu schädigen bzw. abzubauen, dass die spezifischen Eigenschaften des Materials verloren gehen.

Erfindungsgemäß liegt die normierte Scherung

- im Bereich der Barrierezone zwischen 0,1*n und 15,0*n, bevorzugt zwischen 0,5*n und 12,0*n und besonders bevorzugt zwischen 0,6*n und 10*n und

- im Bereich des Scherelements (bsp. im Maddock) zwischen 5*n bis 15*n, bevorzugt zwischen 7,0*n und 12,0*n und besonders bevorzugt zwischen 9*n bis 10*n.

Insbesondere liegt die minimale Scherrate im Bereich der Hauptscherung, dem Feststoffkanal der Barriere bei 0,6*n 1/s und im eigentlichen Scherspalt des Scherelementes bei 9,4*n 1/s. Höhere Scherraten wirken sich in Abhängigkeit Drehzahl ggf. weiter positiv auf das Verfahren aus, und sind demnach bevorzugt.

Durch den Einsatz eines geeigneten Mischelementes wie bsp. dem Pineapple Mischelement wird das hochmolekulare UHMW-PE mit dem in der Extrusion gebildeten fleißfähigeren PE mit niedrigerem Molekulargewicht zu einer homogenen Schmelze geformt.

Die Erfindung wird anhand der nachfolgenden, lediglich Beispiele darstellenden Ausführungen, näher erläutert.

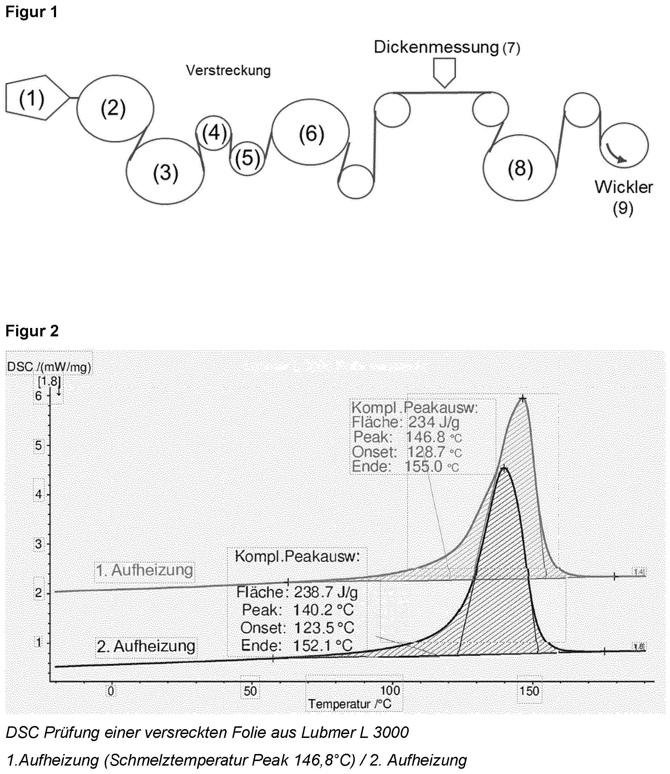

Fig. 1 zeigt eine Extrusionsanlage, die zur Durchführung des Verfahrens der vorliegenden Erfindung verwendet werden kann. Die dargestellten Walzen (Ziffern 2 bis 6 und 8) können sowohl als Einzelwalzen als auch als Walzenkombinationen mit zwei und mehr Walzen ausgeführt sein. Entscheidend für die Fertigung einer zudem in Maschinenrichtung verstreckten Folie ist die korrekte Temperaturführung im Herstellungsprozess.

Dabei bedeutet:

(1) Düse mit flexibler Düsenlippe zur Einstellung der Foliendicke über die Breite (horizontale oder vertikale Anordnung bzw. beliebiger Winkel 0° (aktuelle Position) bis 180°. manuelle, alternativ automatische Dickeneinstellung.
(2) Kühlwalze, alternativ Kühlwalzenkombination oder Glättwerk.
(3) Vorheizwalze bzw. Vorheizwalzenkombination
(4) Langsam laufende Reckwalze(n)
(5) Schnell laufende Reckwalze(n)
(6) Temperwalze(n)
(7) Dickenmessung (bei automatischer Dickeneinstellung direkte Kopplung mit der Düse
(8) Kühlwalze(n)
(9) Wickler

Fig. 2 zeigt eine graphische Darstellung von Ergebnissen der Messung einer verstreckten Folie aus LUBMER™ L3000 von Mitsui Chemicals Inc. (Dichte 0,969 g/cm$^3$) mittels Differenzialscanningkalorimetrie (DSC).

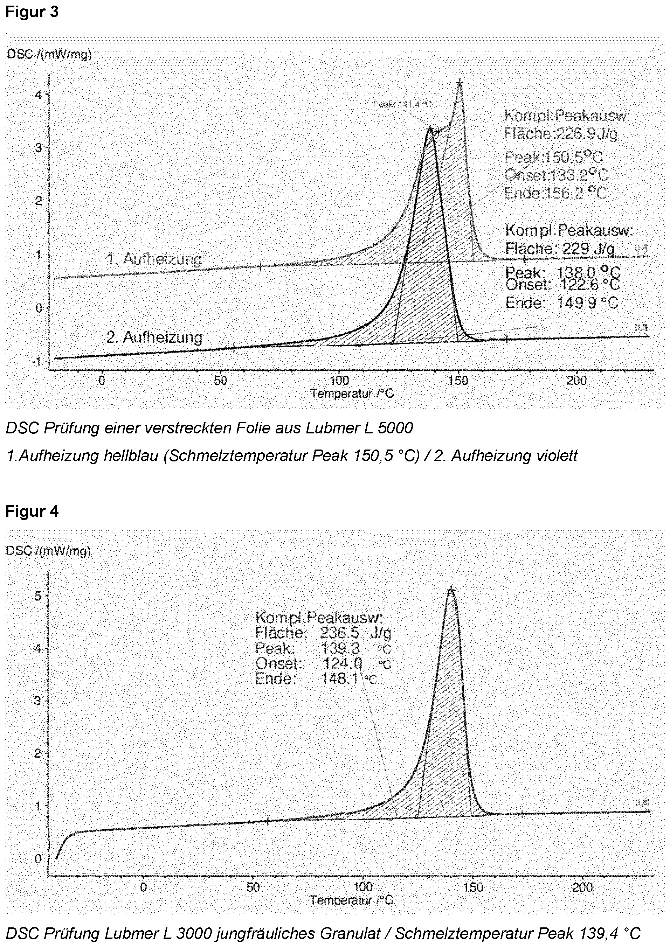

Durch die Verstreckung wird der Kristallisationsgrad des UHMW PE erhöht, was zu einer Verschiebung des Schmelztemperatur Peaks (146,8°C) gegenüber dem Ausgangsrohstoff (139,3°C), dargestellt in Figur 4, führt. Aufgrund von Nachkristallisationsprozessen in der Abkühlphase der DSC Messung liegt der Schmelztemperatur Peak der 2.Aufheizung in Figur 2 mit 140,2°C knapp über dem Wert des Ausgangsrohstoffes vor der Folienfertigung.

Fig. 3 zeigt eine graphische Darstellung von Ergebnissen der Messung einer verstreckten Folie aus LUBMER™ L5000 von Mitsui Chemicals Inc. (Dichte 0,966 g/cm$^3$) mittels DSC. Aufgrund des höheren Molekulargewichtes im Vergleich zum LUBMERTM L3000, liegt der Schmelztemperatur Peak bei 150,5°C.

Fig. 4 zeigt eine graphische Darstellung von Ergebnissen der Messung des LUBMER™ L3000-Ausgangsmaterials von Mitsui Chemicals Inc. mit einer Dichte 0,969 g/cm$^3$ mittels DSC.

Fig. 5 zeigt das Zwei-Platten-Modell.

Eine bevorzugtes Ausführungsbeispiel der Erfindung wird in der nachfolgenden Beschreibung näher erläutert, wobei auf die Fig. 1 bis 4 Bezug genommen wird.

Eine Extrusionsanlage, die zur Durchführung des Verfahrens der vorliegenden Erfindung verwendet werden kann, ist schematisch in der Fig. 1 gezeigt, wobei vom Extruder aus Gründen der Vereinfachung lediglich die Foliendüse 1 gezeigt ist. Auf die Fig. 1 wird in der nachstehenden Erläuterung des erfindungsgemäßen Verfahrens Bezug genommen.

Das Verfahren zur Herstellung einer Folie aus einem Polyethylen mit ultrahohem Molekulargewicht (UHMW-PE) umfasst zunächst das Extrudieren eines UHMW-PE mit einem Extruder, ausgelegt auf eine hohe Scherung, durch Kombination einer Barriereschnecke mit einem Maddock-Scherteil und einem Pineapple Mischer sowie einer dickenverstellbaren Foliendüse mit einer Dickenmesseinrichtung 1, wie sie in der Fig. 1 gezeigt ist, zu einer Folie.

Das in dem Verfahren der vorliegenden Erfindung verwendbare UHMW-PE ist nicht speziell beschränkt und handelsübliche Materialien können verwendet werden. Vorzugsweise weist das verwendete thermoplastische UHMW-PE jedoch ein Molekulargewicht zwischen $1 \times 10^4$ g/mol und $10 \times 10^6$ g/mol, mehr bevorzugt zwischen $5 \times 10^5$ g/mol und $5 \times 10^6$ g/mol und insbesondere zwischen $0,75 \times 10^6$ g/mol und $3 \times 10^6$ g/mol auf. Die Dichte des verwendeten UHMW-PE ist größer 0,96 g/cm$^3$. Die Dichtemessung ist in ASTM D 1505 beschrieben.

Besonders gut geeignete UHMW-PE-Qualitäten für einen Einsatz in der vorliegenden Erfindung sind bsp. LUBMER™ L3000, L4000 oder L5000, hergestellt von Mitsui Chemicals, Inc., und Mischung davon.

Der in dem Ausführungsbeispiel der vorliegenden Erfindung verwendete Extruder, weist eine Kombination einer Barriereschnecke mit einem Maddock-Scherteil und einem Pineapple-Mischer auf, um die erfindungsgemäß hohe Scherung zu erhalten. Der Extruder mit Barriereschnecke weist ein Kompressionsverhältnis von 1,0 bis 1,5, besonders bevorzugt 1,15 bis 1,4 und einem UD-Verhältnis von 20 bis 40, besonders bevorzugt 24 bis 36 auf. Die die normierte Scherung lag im Bereich der Barrierezone zwischen 0,5*n und 12,0*n und im Maddock-Scherteil im Bereich 7,0*n und 12,0*n.

Beim Formgebungswerkzeug für die gegossene Folie handelt es sich um eine Breitschlitzdüse, wahlweise eine T-Kanal- oder Kleiderbügeldüse, mit mindestens einer flexiblen Düsenlippe, über die mittels rein mechanischer Bolzen, Thermodehnungsbolzen oder Piezoaktoren die Dickentoleranz manuell und/oder automatisch eingestellt bzw. angepasst werden kann.

Gemäß dem Verfahren der vorliegenden Erfindung wird die extrudierte Folie, im Prozessverlauf in dieser Reihenfolge, über eine Kühlwalze bzw. Kühlwalzenkombination (2), auch als Gießeinheit bezeichnet, mindestens eine Vorheizwalze (3), mindestens eine Temperwalze (6), durch ein Dickenmessgerät (7), mindestens eine Kühlwalze (8) und eine nicht gezeigte Abzugseinheit mit Randbeschnitt und gegebenenfalls einer Oberflächenfunktionalisierung (z.B. einer Corona-Vorbehandlung) zu einer Aufwickeleinheit (9) geführt, deren Anordnung in der Fig. 1 gezeigt ist. Alternativ ist zusätzlich ein Randbeschnitt und eine Dickenmessung zwischen Kühlwalze(n) und Vorheizwalze(n) integriert.

Die Extrusionstemperatur, gemessen vor der Düse, beträgt dabei 170 bis 300 °C, vorzugsweise 190°C bis 280°C, mehr bevorzugt 200°C bis 270°C, die Temperatur der Kühlwalze(n) (2) beträgt 20°C bis 150 °C, vorzugsweise 60°C bis 130 °C, mehr bevorzugt 80°C bis 120°C, die Temperatur der Vorheizwalze(n) (3) beträgt 60°C bis 130°C, vorzugsweise 80°C bis 125°C, mehr bevorzugt 100°C bis 120°C, die Temperatur der Temperwalze(n) (6) beträgt 80°C bis 160°C, vorzugsweise 90°C bis 150°C, mehr bevorzugt 100°C bis 140°C, und die Temperatur der Kühlwalze(n) (8) beträgt 0°C bis 50°C, vorzugsweise 15°C bis 40°C. Die Abzugsgeschwindigkeit der Folie beträgt 0,1 bis 35 m/min, vorzugsweise 2 bis 20 m/min und mehr bevorzugt 3 bis 10 m/min.

Gemäß einer bevorzugten Ausführungsform des vorliegenden Verfahrens wird die extrudierte Folie zwischen der/n Vorheizwalze(n) (3) und der/n Temperwalze(n) (6) stromabwärts in dieser Reihenfolge ferner über ein(e) langsam laufende(s) Streckwalze(npaar) (4) und ein(e) schnell laufende(s) Streckwalze(npaar) (5) geführt, deren Anordnung ebenfalls in der Fig. 1 gezeigt ist.

Gemäß einer bevorzugten Ausführungsform des vorliegenden Verfahrens wird durch die Streckwalzen (4) und (5) ein Verstrecken in der Maschinenrichtung (MD) im Bereich von 1:3 bis 1:8, vorzugsweise im Bereich von 1:3,5 bis 1:6,5 und mehr bevorzugt im Bereich von 1:4,0 bis 1:5,5 durchgeführt.

Wie es in den Beispielen und in den Fig. 2 und 3 gezeigt ist, wird durch das Verstrecken in den vorstehend genannten Bereichen die thermische Stabilität (siehe Fig. 2, DSC-Schmelztemperatur Peak 1. Aufheizung mit 146,8°C im Vergleich zur 2. Aufheizung mit 140,2°C bzw. Fig. 4 mit einer Schmelztemperatur Peak von 139,3°C) der mit dem erfindungsgemäßen Verfahren hergestellten Folien deutlich verbessert. Ferner werden auch die Glätte der Folien verbessert und die Festigkeiten in Maschinenrichtung erhöht.

Gemäß einer bevorzugten Ausführungsform des vorliegenden Verfahrens weist die langsam laufende Streckwalze bzw. das langsam laufende Streckwalzenpaar (4) eine Temperatur von 100°C bis 150°C, vorzugsweise von 110°C bis 140°C und mehr bevorzugt von 120°C bis 135°C auf, und die schnell laufende Streckwalze bzw. das schnell laufende Streckwalzenpaar 5 weist eine Temperatur auf, die um 20°C, vorzugsweise um 15°C und mehr bevorzugt um bis zu 10°C höher ist als die Temperatur der langsam laufenden Streckwalze bzw. des langsam laufenden Streckwalzenpaars (4). Die Streckwalzen können sowohl als Einzelwalzen als auch Walzenpaare angeordnet sein, wobei die Temperaturen der einzelnen Walzen individuell variiert werden können.

Gemäß einer bevorzugten Ausführungsform des vorliegenden Verfahrens wird eine über die Folienbreite gleichmäßige Foliendicke bzw. das Rollenprofil der Folie auf der Aufwickeleinheit (9) durch Einstellen von Düsenbolzen der Foliendüse 1 gemäß einer Messung der Dicke mit dem Dickenmessgerät 7 gewährleistet.

Gemäß einer bevorzugten Ausführungsform des vorliegenden Verfahrens weist eine unverstreckte Folie eine Dicke von mehr als 60 bis 800 Mikrometer, vorzugsweise von 80 bis 500 Mikrometer und mehr bevorzugt von 100 bis 400 Mikrometer auf, und eine verstreckte Folie weist eine Dicke von 10 bis 100 Mikrometer, vorzugsweise von 20 bis 70 Mikrometer und mehr bevorzugt von 30 bis 60 Mikrometer auf.

Gemäß einer bevorzugten Ausführungsform des vorliegenden Verfahrens weist eine unverstreckte Folie einen E-Modul in der MD von 800 bis 1800 MPa, vorzugsweise von 900 bis 1600 MPa und mehr bevorzugt von 1000 bis 1400 auf, und eine verstreckte Folie weist einen E-Modul in der MD von mehr als 1800 bis 5000 MPa, vorzugsweise von 2000 bis 4500 MPa und mehr bevorzugt von 2500 bis 4000 MPa auf.

Die vorliegende Erfindung stellt ferner eine unverstreckte oder verstreckte Folie aus UHMW-PE bereit, die nach dem erfindungsgemäßen Verfahren erhältlich ist. Diese Folie kann beispielsweise, ohne darauf beschränkt zu sein, als Berstfolie, als PFAS-freie Alternative zu Fluorpolymerfolien für beispielsweise einen Tieftemperatureinsatz bei < -90 °C oder als verschleißarme Gleitschicht verwendet werden.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.


**Beispiele**


Nachstehend sind Beispiele angegeben, welche die vorliegende Erfindung weiter erläutern sollen. Die vorliegende Erfindung ist durch diese Beispiele nicht beschränkt.

**Beispiel 1** - Herstellung einer unverstreckten Folie mit einer Dicke von 100 μm. Ausgehend von einem UHMW-PE mit einer Dichte von 0,966 g/cm$^3$ (Rohstoff).

Die Extrusion erfolgte mit einem Einschneckenextruder, ausgelegt auf eine hohe Scherung, durch Kombination einer Barriereschnecke mit einem Maddock-Scherteil und einem Pineapple-Mischer. Die Scherrate entsprach den in Tabelle 1 angegebenen normierten Scherraten bei einer Schneckendrehzahl von 17 U/min. Die verwendete Breitschlitzdüse wies einen Einstellbereich des Düsenspalts von 0,1 bis 1,5 mm und 24 Bolzen auf. Die Austrittsbreite betrug 620 mm. Der Primärfilm wurde auf eine Kühlwalze mit einem Durchmesser von 490 mm aufgegossen. Die Fixierung des Primärfilms erfolgte wahlweise mit einem Luftmesser (Eigenkonstruktion) oder elektrostatischem Pinning. Die Dickenmesseinheit stammte von der Firma Electronic SYSTEMS und die Dicke wurde kontaktlos gemessen (Kr-Isotop).

Die Verfahrensbedingungen waren wie folgt:

- Extrudertemperaturen: 200 -bis 275 °C
- Adapter und Düsentemperaturen: alle Zonen 250 °C
- Kühlwalzentemperatur (Gießwalze): 105 °C
- Kühlwalze vor der Aufwickeleinheit: 20 °C
- Extruderschneckendrehzahl: 17 U/min
- Abzugsgeschwindigkeit 6,9 m/min

Die Prüfungen an den Folien aus Tabelle 2 (siehe E2) erfolgten nach den Normen:

- Zugprüfung (Messgerät: Zwick): DIN EN ISO 527
- Foliendicke: DIN 53370
- Flächengewicht: DIN EN ISO 536
- Schrumpf (Hilfsmittel: Ofen oder Wasserbad): DIN EN ISO 11501
- Reibungskoeffizienten (Messgerät: Zwick): DIN EN ISO 8295

**Beispiel 2** - Herstellung einer verstreckte Folie mit einer Dicke von 41 $\mu$m. Ausgehend von einem UHMW-PE mit einer Dichte von 0,966 g/cm$^3$ (Rohstoff).

Die Extrusion erfolgte mit einem Einschneckenextruder ausgelegt auf eine hohe Scherung, durch Kombination einer Barriereschnecke mit einem Maddock-Scherteil und einem Mischigel. Die Scherrate entsprach den in Tabelle 1 angegebenen normierten Scherraten bei einer Schneckendrehzahl von 25 U/min. Die verwendete Breitschlitzdüse wies einen Einstellbereich des Düsenspalts von 0,1 bis 1,5 mm und 24 Bolzen auf. Die Austrittsbreite betrug 620 mm. Der Primärfilm wurde auf eine Kühlwalze mit einem Durchmesser von 490 mm aufgegossen. Die Fixierung des Primärfilms erfolgte wahlweise mit einem Luftmesser (Eigenkonstruktion) oder elektrostatischem Pinning. Die Dickenmesseinheit stammte von der Firma Electronic SYSTEMS und die Dicke wurde kontaktlos gemessen (Kr-Isotop).

Die Verfahrensbedingungen waren wie folgt:

- Extrudertemperaturen: 200 bis 270 °C
- Adapter und Düsentemperaturen: alle Zonen 250 °C
- Kühlwalzentemperatur (Gießwalze): 100 °C
- Vorheizwalzentemperatur: 123 °C
- Reckwalzen (langsam): 124 °C
- Reckwalzen (schnell): 132 °C
- Weiterheizwalze: 120 °C
- Kühlwalze vor der Aufwickeleinheit: 20 °C
- Extruderschneckendrehzahl: 25 U/min
- Abzugsgeschwindigkeit 3,7 m/min
- Wickelgeschwindigkeit: 19,3 m/min

Die Prüfungen an den Folien aus Tabelle 4 (siehe E4) erfolgten nach den Normen:

- Zugprüfung (Messgerät: Zwick): DIN EN ISO 527
- Foliendicke: DIN 53370
- Flächengewicht: DIN EN ISO 536
- Schrumpf (Hilfsmittel: Ofen oder Wasserbad): DIN EN ISO 11501
- Reibungskoeffizienten (Messgerät: Zwick): DIN EN ISO 8295
- Schlagzumessung (Pendelschlagwerk von Zwick): DIN EN ISO 8256

Die herausragenden Eigenschaften der verstreckten UHMW PE Folie nach Beispiel 2 sind die bereits benannte Erhöhung des Schmelztemperatur Peaks und der extrem niedrige Schrumpf. Bei vergleichbaren Folien, die aus regulärem HDPE hergestellt werden, liegt der Schrumpf bei 1,0 - 2,0 %.

Durch die Ausrichtung der langen Molekülketten in Maschinenrichtung parallel zueinander, hervorgerufen durch die Verstreckung, weisen längsverstreckte UHMW PE Folien eine geringe Vernetzung quer zur Maschinenrichtung auf. Als direkte Folge bricht die Folie schon bei geringer Druckbelastung mit Rissverlauf in Maschinenrichtung auf. Die hierbei nötigen Drücke sind vergleichsweise niedrig und können über die Foliendicke und das Reckverhältnis spezifisch auf Berstdruckwerte < 100 kPa eingestellt werden. Messungen an verstreckten PE Folien ergaben folgende Werte:

Die folgende Tabelle (Tab. 2) zeigt den Berstdruck im Vergleich HDPE und UHMW-PE

| Folie | HDPE | HDPE | UHMW PE | UHMW PE |
|---|---|---|---|---|
| Stärke [μm] | 15 | 30 | 35 | 50 |
| Berstdruck [kPA] | 77 | 168 | 29 | 71 |

Die folgende Tabelle (Tab. 3) zeigt die Ergebnisse der vorstehenden Beispiele:

| Prüfkriterium | Prüfrichtung | Einheit | Unverstreckte Folie Lubmer L 5000 (Dichte 0,966) | Vertsreckte Folie Lubmer L 5000 (Dichte 0,966) |
|---|---|---|---|---|
| Dicke (Taster) | TD | μm | 100 | 41 |
| Flächengewicht | | g/m² | 74 | 34 |
| E-Modul | MD | MPa | 1070 | 3495 |
| Streckkraft | MD | N/15 mm | 43 | 72,2 |
| Streckdehnung | MD | % | 24,9 | 12,2 |
| Kraft 5% Dehnung | MD | N/15 mm | - | 48,5 |
| Kraft 10% Dehnung | MD | N/15 mm | - | 69,7 |
| Kraft 20% Dehnung | MD | N/15 mm | - | 83,8 |
| Max. Zugkraft | MD | N/15 mm | 43,99 | 91,9 |
| Bruchdehnung | | % | 36,9 | 27,4 |
| Schlagzug | TD | kJ/m² | 76,8 | 210,4 |
| Schrumpf 100°C/5min | MD | % | 1 | 0 |
| Haftreibungskoeffizient | MD a-a | | 0,2 | 0,21 |
| Gleitreibungskoeffizient | MD a-a | | 0,21 | 0,22 |
| Haftreibungskoeffizient | MD i-i | | 0,22 | 0,21 |
| Gleitreibungskoeffizient | MD i-i | | 0,22 | 0,22 |

Das erfindungsgemäße Verfahren ermöglicht somit eine direkte Herstellung von Folien aus UHMW-PE, die sowohl unverstreckt als auch verstreckt sein können und hervorragende Eigenschaften aufweisen, mittels einer Extrusion ohne den Umweg eines Schälens eines vorher hergestellten Formkörpers.

**Patentansprüche**

1. Verfahren zur Herstellung einer Folie aus einem Polyethylen mit ultrahohem Molekulargewicht (UHMW-PE), umfassend die Schritte:

   - Bereitstellung eines UHMW-PE mit einer Dichte größer 0,96 g/cm$^3$ und einem Molekulargewicht zwischen $1 \times 10^4$ g/mol und $10 \times 10^6$ g/mol
   - Extrudieren des bereitgestellten UHMW-PE mit einem Extruder, ausgelegt auf eine hohe Scherung, durch eine Kombination einer Barriereschnecke mit zumindest einem Scherelement und zumindest einem Mischelement zu einer Folie,
   - Führen der extrudierten Folie über eine Kühlwalzenkombination, wobei die Extrusionstemperatur 170°C bis 300°C beträgt.

2. Verfahren nach Anspruch 1, **dadurch gekennzeichnet, dass** eine normierte Scherung im Bereich der Barrierezone zwischen 0,1*n und 15*n und im Bereich des Scherelements zwischen 5*n bis 15*n liegt.

3. Verfahren nach Anspruch 1 oder 2, **gekennzeichnet durch** einen Extruder mit Barriereschnecke mit einem Kompressionsverhältnis von 1,0 bis 1,5 und einem L/D-Verhältnis von 20 bis 40.

4. Verfahren nach einem der Ansprüche 1 bis 3, wobei die Schneckendrehzahl zwischen 15 und etwa 150 U/min liegt.

5. Verfahren nach einem der vorstehenden Ansprüche, **dadurch gekennzeichnet, dass** die Kühlwalze bzw. Kühlwalzenkombination (2), im Prozessverlauf in dieser Reihenfolge, mindestens eine Vorheizwalze (3), mindestens eine Temperwalze (6), ein Dickenmessgerät (7), mindestens eine weitere Kühlwalze (8), eine Abzugseinheit mit Randbeschnitt und gegebenenfalls einer Oberflächenfunktionalisierung sowie eine Aufwickeleinheit (9) umfasst, und dass die Temperatur der Kühlwalze(n) (2) direkt nach einer Düse (1) 20°C bis 150°C, die Temperatur der Vorheizwalze(n) (3) 60°C bis 130°C, die Temperatur der Temperwalze(n) (6) 80°C bis 160°C beträgt und die Temperatur der Kühlwalze(n) (8) 0°C bis 50°C beträgt, und dass die Abzugsgeschwindigkeit der Folie aus der Foliendüse (1) 0,1 bis 35 m/min beträgt.

6. Verfahren nach Anspruch 5, **dadurch gekennzeichnet, dass** die extrudierte Folie zwischen der/n Vorheizwalze(n) (3) und der/n Temperwalze(n) (6) im Prozessverlauf in dieser Reihenfolge ferner über ein(e) langsam laufende(s) Streckwalze(npaar) (4) und ein(e) schnell laufende(s) Streckwalze(npaar) (5) geführt wird.

7. Verfahren nach Anspruch 6, wobei die langsam laufende(n) Streckwalze(n) (4) eine Temperatur von 100°C bis 150°C aufweist und die schnell laufende(n) Streckwalze(n) (5) eine Temperatur aufweist, die um bis zu 20°C höher ist als die Temperatur der langsam laufenden Streckwalze(n) (4).

8. Verfahren nach Anspruch 6 oder 7, wobei durch die Streckwalzeneinheiten (4) und (5) ein Verstrecken in der Maschinenrichtung (MD) im Bereich von 1:3 bis 1:8 durchgeführt wird.

9. Verfahren nach einem der Ansprüche 1 bis 5, wobei eine unverstreckte Folie eine Dicke von mehr als 60 bis 800 Mikrometer und/oder einen E-Modul in der MD von 800 bis 1800 MPa aufweist.

10. Verfahren nach einem der Ansprüche 6 bis 8, wobei eine verstreckte Folie eine Dicke von 10 bis 100 Mikrometer und/oder einen E-Modul in der MD von mehr als 1800 bis 5000 MPa aufweist.

11. Unverstreckte oder verstreckte Folie aus UHMW-PE, erhältlich nach dem Verfahren gemäß einem der Ansprüche 1 bis 5 und 9 oder 6 bis 8 und 10.

12. Verwendung einer unverstreckten oder verstreckten Folie nach Anspruch 11 als Berstfolie, als PFAS-freie Alternative zu Fluorpolymerfolien für einen Tieftemperatureinsatz bei < -90°C oder als verschleißarme PFAS-freie Gleitschicht.

13. Verwendung einer verstreckten Folie nach einem der Ansprüche 6 bis 9 als Berstfolie mit einem dezidiert niedrigem und über die Folienbreite und Lauflänge gleichbleibenden Berstdruck von < 100 kPa.

14. Verwendung nach Anspruch 13, wobei der Berstdruck bei einer Folienstärke $\leq 40\ \mu m$ < 50 kPa beträgt.

**Figur 1**

**Figur 2**

DSC Prüfung einer versreckten Folie aus Lubmer L 3000

1.Aufheizung (Schmelztemperatur Peak 146,8°C) / 2. Aufheizung

**Figur 3**

DSC /(mW/mg)

Peak: 141.4 °C

Kompl.Peakausw:
Fläche:226.9 J/g

Peak:150.5 °C
Onset:133.2 °C
Ende:156.2 °C

Kompl.Peakausw:
Fläche: 229 J/g

Peak: 138.0 °C
Onset: 122.6 °C
Ende: 149.9 °C

1. Aufheizung

2. Aufheizung

Temperatur /°C

*DSC Prüfung einer verstreckten Folie aus Lubmer L 5000*

*1.Aufheizung hellblau (Schmelztemperatur Peak 150,5 °C) / 2. Aufheizung violett*

**Figur 4**

DSC /(mW/mg)

Kompl.Peakausw:
Fläche: 236.5 J/g
Peak: 139.3 °C
Onset: 124.0 °C
Ende: 148.1 °C

Temperatur /°C

*DSC Prüfung Lubmer L 3000 jungfräuliches Granulat / Schmelztemperatur Peak 139,4 °C*

Figur 5

Europäisches
Patentamt

European
Patent Office

Office européen
des brevets

# EUROPÄISCHER RECHERCHENBERICHT

**Nummer der Anmeldung**

EP 24 20 8809

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | JP S60 101021 A (ASAHI CHEMICAL IND) 5. Juni 1985 (1985-06-05) <br> * Zusammenfassung * <br> * Seite 135 * <br> * Anspruch 1 * <br> * Abbildung 3 * <br> - - - - - | 1-14 | INV. <br> B29C48/08 <br> B29C48/305 <br> B29C48/395 <br> B29C48/565 <br> B29C48/575 <br> B29C48/88 |
| A | US 5 063 016 A (BAUER PETER [DE] ET AL) 5. November 1991 (1991-11-05) <br> * Anspruch 2 * <br> * Abbildungen 1,2 * <br> - - - - - | 1-14 | B29C48/92 <br> B29C48/66 |
| X | US 2022/347909 A1 (FIFIELD ROBERT MARC [NL] ET AL) 3. November 2022 (2022-11-03) | 11-14 | |
| A | * Anspruch 1 * <br> * Abbildung 1 * <br> - - - - - | 1-10 | |
| A | KR 2013 0075208 A (JIN CHAN KYU [KR]; KIM YOUNG SOO [KR]) 5. Juli 2013 (2013-07-05) <br> * Ansprüche 1,2 * <br> - - - - - | 1-14 | |
| A | EP 2 043 838 B1 (QUADRANT EPP AG [CH]) 21. Oktober 2015 (2015-10-21) <br> * Anspruch 2 * <br> * Abbildungen 1,2 * <br> - - - - - | 1-14 | **RECHERCHIERTE SACHGEBIETE (IPC)** <br><br> B29C <br> B29K |

Der vorliegende Recherchenbericht wurde für alle Patentansprüche erstellt

| Recherchenort | Abschlußdatum der Recherche | Prüfer |
|---|---|---|
| München | 18. März 2025 | Koning, Erik |

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 24 20 8809

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-03-2025

| Im Recherchenbericht angeführtes Patentdokument | Datum der Veröffentlichung | Mitglied(er) der Patentfamilie | | Datum der Veröffentlichung |
|---|---|---|---|---|
| JP S60101021 A | 05-06-1985 | KEINE | | |
| US 5063016 A | 05-11-1991 | AT | E91457 T1 | 15-07-1993 |
| | | DE | 3915603 C1 | 15-03-1990 |
| | | EP | 0397004 A2 | 14-11-1990 |
| | | JP | H0363118 A | 19-03-1991 |
| | | US | 5063016 A | 05-11-1991 |
| US 2022347909 A1 | 03-11-2022 | BR | 112022000649 A2 | 03-03-2022 |
| | | CA | 3147014 A1 | 21-01-2021 |
| | | EP | 3999306 A1 | 25-05-2022 |
| | | NL | 2023518 B1 | 22-02-2021 |
| | | US | 2022347909 A1 | 03-11-2022 |
| | | WO | 2021008970 A1 | 21-01-2021 |
| KR 20130075208 A | 05-07-2013 | KEINE | | |
| EP 2043838 B1 | 21-10-2015 | BR | PI0714807 A2 | 21-05-2013 |
| | | CA | 2655616 A1 | 24-01-2008 |
| | | EP | 2043838 A1 | 08-04-2009 |
| | | JP | 5087621 B2 | 05-12-2012 |
| | | JP | 2009544485 A | 17-12-2009 |
| | | KR | 20090033276 A | 01-04-2009 |
| | | PL | 2043838 T3 | 29-04-2016 |
| | | WO | 2008009150 A1 | 24-01-2008 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2004067118 A1
- EP 4001325 A1
- EP 3913015 A1
- WO 2023114080 A1
- US 9926416 B2